Europäisches Patentamt

European Patent Office

Office européen des brevets

(19)

(11) **EP 0 516 030 B1**

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(51) Int Cl.$^6$: **C08L 3/04**, C08B 30/12, B29C 47/00

(21) Anmeldenummer: **92108818.3**

(22) Anmeldetag: **26.05.1992**

(54) **Verfahren und Vorrichtung zur Herstellung von Stärkeschmelze sowie nach diesem Verfahren erhältliche Produkte**

Process and apparatus for the preparation of melts of starch and the products obtained by this process

Procédé et appareil pour la préparation de fontes d'amidon et produits obtenus par ce procédé

(84) Benannte Vertragsstaaten:
**CH DE FR GB IT LI NL SE**

(30) Priorität: **29.05.1991 DE 4117628**

(43) Veröffentlichungstag der Anmeldung:
**02.12.1992 Patentblatt 1992/49**

(73) Patentinhaber: **EMS-INVENTA AG**
**CH-8001 Zürich (CH)**

(72) Erfinder:
• **Buehler, Friedrich Severin, Dr. rer. nat.**
**CH-7430 Thusis (CH)**
• **Casanova, Josef**
**CH-7402 Bonaduz (CH)**
• **Ernst, Hansjörg**
**CH-7013 Domat/Ems (CH)**
• **Schultze, Hans-Joachim, Dr. rer. nat.**
**CH-7000 Chur (CH)**

(74) Vertreter: **Müller-Boré & Partner Patentanwälte**
**Grafinger Strasse 2**
**81671 München (DE)**

(56) Entgegenhaltungen:
EP-A- 0 118 240          EP-A- 0 400 531
WO-A-90/14938          WO-A-92/02559

**Beschreibung**

Die Erfindung betrifft ein Verfahren zur Herstellung einer homogenen, niedrigviskosen, thermoplastisch verarbeitbaren Stärkeschmelze aus chemisch modifizierter Stärke, mindestens einem Weichmacher und weiteren Additiven. Die Erfindung betrifft ferner eine Vorrichtung zum Durchführen dieses Verfahrens sowie eine homogene, niedrigviskose, thermoplastich verarbeitbare Stärkeschmelze, die nach diesem Verfahren erhältlich ist.

Insbesondere betrifft die Erfindung eine Stärkeschmelze aus chemisch modifizierter Stärke mit einer Schmelzviskosität von 500 bis 30.000 Pa.s, gemessen bei 160°C und 236,4 N in einem Göttfert-Schmelzdurchflussviskosimeter und daraus hergestellte thermoplastisch geformte Teile, wie Granulate, Filme und Folien, Hohlkörper oder Laminate.

Da Stärke ein makromolekulares pflanzliches Kohlenhydrat ist, gibt es Bestrebungen, sie als sogenannten natürlichen Kunststoff auf den verschiedensten Gebieten unter Einsatz der bekannten Kunststoffverarbeitungstechniken zur Anwendung zu bringen. Aufgrund ihrer körnigen Struktur müssen native Stärken aber erst aufgeschlossen werden, bevor sie thermoplastisch verarbeitbar sind.

Die US-A-4,673,438 beschreibt ein sechsstufiges Spritzgussverfahren zur Herstellung eines geformten Gegenstandes aus einer Stärke-Wasser-Zusammensetzung mit einem Wassergehalt von 5-30 Gew.-%. Nachteil des hohen Wassergehaltes ist, dass eine besondere Vorrichtung notwendig ist, damit das Plastifiziermittel Wasser bei den hohen Verarbeitungstemperaturen nicht in Form von Dampf entweicht.

Die WO-A-90/05 161 beschreibt ein Verfahren zur Herstellung von thermoplastisch verarbeitbarer Stärke, wobei die dortige Erniedrigung der Schmelztemperatur der Stärke bzw. der Stärkederivate durch Zugabe von mindestens 5 bis 35 Gew.-% von Zuschlagstoffen mit einem definierten Löslichkeitsparameter erreicht wird.

Die WO-A-90/14 938 zeigt ein Verfahren zur Herstellung eines Formteils aus einem hochamylosehaltigen Stärkematerial mit genügend Wasser mit dem Verfahrensschritt der Entgasung.

Der Nachteil von beiden oben genannten WO-Offenlegungsschriften ist, dass bei Anwendung der in der Kunststoffindustrie üblichen Verfahren, bei denen die Additive, wie z. B. Weichmacher, im festen Zustand nach der Einzugszone in die Polymerschmelze zudosiert werden, zu Inhomogenitäten in der Stärkeschmelze und dem daraus hergestellten Granulat führt. Dadurch wird der weitere Verarbeitungsprozess, z. B. infolge Strangbrüche, gestört. Auch ist die Herstellung einer homogenen, thermoplastisch verarbeitbaren Stärkeschmelze mit in der Kunststoffindustrie üblichen, für die Verarbeitung von Polymeren ausgelegten Vorrichtungen nicht möglich. Hierzu fehlt im Stand der Technik die notwendige Lehre.

Ausserdem hat sich die in der Kunststoffindustrie übliche Methode, die Schmelzviskosität über den Weichmachergehalt zu steuern als untauglich erwiesen, da die notwendigen grossen Mengen an Weichmacher für eine niedrigviskose Stärkeschmelze zugleich die Schmelzestabilität derart verringern, dass der Schmelzestrom abreisst, was besonders nachteilig bei der Folienherstellung ist.

EP-A-0 118 240 beschreibt eine Stärkezusammensetzung, die Stärke mit einem Molekulargewicht von 10 000 bis 20 000 000 Dalton und einem Wassergehalt von 5 bis 30 Gew.-% enthält. Weiterhin enthält die Zusammensetzung 0,5-40% eines Weichmachers und 0,001-10% eines Gleitmittels. Diese Stärkezusammensetzung ist jedoch nicht thermoplastisch verarbeitbar.

Aufgabe der Erfindung ist es daher, ein Verfahren zur Herstellung einer homogenen, thermoplastisch verarbeitbaren Schmelze aus chemisch modifizierter Stärke, Weichmacher und weiteren Additiven zur Verfügung zu stellen, wobei kein Fremdwasserzusatz erforderlich ist und ein störungsfreier Verarbeitungsprozess gewährleistet wird. Weiterhin soll eine Vorrichtung zur Durchführung dieses Verfahrens bereitgestellt werden. Schliesslich soll durch dieses Verfahren eine niedrigviskose Stärkeschmelze mit hoher Schmelzestabilität geliefert werden, woraus dann geformte Teile, insbesondere Stärkefolien, hergestellt werden können, die schnell erstarren, eine minimale Versprödung und eine geringe Wasseraufnahme zeigen.

Diese Aufgabe wird durch die kennzeichnenden Merkmale der Ansprüche 1, 2 und 22 bzw. 28 gelöst. Vorteilhafte Ausgestaltungen ergeben sich aus den Unteransprüchen.

Es wurde festgestellt, dass überraschenderweise eine niedrigviskose Stärkeschmelze mit hoher Schmelzestabilität herstellbar ist, wenn der Weichmachergehalt reduziert wird und bestimmte Emulgatoren und Additive zugesetzt werden.

Wird als Additiv das bzw. die Emulgierhilfsmittel Harnstoff oder Harnstoffderivate oder deren Mischungen eingesetzt, so wird zwar die Fliessfähigkeit, aber nicht die Zähigkeit herabgesetzt. Eine solche Stärkeschmelze ist besonders für die Flach- und Blasfolienherstellung geeignet.

Weiterhin wurde festgestellt, dass überraschenderweise das Aufschliessen der Stärkekörner auf kleinstem Raum erzielt werden kann, wenn die Knetelemente zu einer geschlossenen Knetkammer angeordnet werden, die eine intensive Bearbeitung der Stärke ermöglicht, wobei diese Knetkammer erst nach einer gewissen Förderstrecke nach Zugabe der flüssigen Komponenten-Mischung angeordnet ist. Dies unterscheidet sich erheblich von der Anordnung der Knetzonen gemäss dem vorgenannten Stand der Technik, in der bereits vor der Additiv-Zugabevorrichtung eine Knetzone eingebaut und unmittelbar dahinter mehrere getrennte Knetzonen angeordnet sind.

Das erfindungsgemässe Verfahren zur Herstellung einer homogenen thermoplastisch verarbeitbaren Schmelze aus chemisch modifizierter Stärke umfasst folgende Verfahrensschritte:

a) Eindosieren einer chemisch modifizierten Stärke in den Einzugsbereich eines Extruders und deren Förderung,
b) Zudosieren einer ohne Fremdwasserzusatz vorhomogenisierten, flüssigen Weichmacher-Emulgator-Additiv-Mischung, deren Vermischung mit der Stärke bei gleichzeitiger Förderung der Stärke-Weichmacher-Emulgator-Additiv-Mischung,
c) Aufschliessen der Stärkekörner ohne Beimischung von Fremdwasser und vollständige Plastifizierung der genannten Mischung zu einer homogenen, thermoplastisch verarbeitbaren Schmelze und deren Förderung,
d) Entgasen der Schmelze und deren weitere Förderung,
e) Auspressen der Schmelze durch eine Düse, wobei in den Schritten b) bis e) die genannte Mischung bzw. Schmelze hinreichend erhöhten Temperaturen, im Schritt
d) einem verminderten Druck, und in Schritt e) einem erhöhten Druck ausgesetzt wird bzw. die folgenden Verfahrensschritte

a) Separates Eindosieren einer chemisch modifizierten Stärke und eines Weichmachers in den Einzugsbereich eines Extruders, deren Vermischung und Förderung
b) Zudosieren einer ohne Fremdwasserzusatz vorhomogenisierten, flüssigen Emulgator-Additiv-Mischung, deren Vermischung mit der Stärke-Weichmacher-Mischung bei gleichzeitiger Förderung der Stärke-Weichmacher-Emulgator-Additiv-Mischung
c) Aufschliessen der Stärkekörner ohne Beimischung von Fremdwasser und vollständige Plastifizierung der genannten Mischung zu einer homogenen, thermoplastisch verarbeitbaren Schmelze und deren Förderung,
d) Entgasen der Schmelze und deren weitere Förderung,
e) Auspressen der Schmelze durch eine Düse,

wobei in den Schritten b) bis e) die genannte Mischung bzw. Schmelze hinreichend erhöhten Temperaturen , im Schritt d) einen verminderten Druck und in Schritt e) einem erhöhten Druck ausgesetzt wird.

In einer bevorzugten Ausführung des Verfahrens wird in Schritt a) ein fester Weichmacher, bevorzugt mit einem Schmelzpunkt grösser 60°C, separat mit einer chemisch modifizierten Stärke in den Einzugsbereich eines Extruders und in Schritt b) ein zweiter Weichmacher, bevorzugt mit einem Schmelzpunkt kleiner 60°C, als Bestandteil der flüssigen Weichmacher-Emulgator-Additiv-Mischung ein- bzw. zudosiert.

Die erfindungsgemäss verwendete chemisch modifizierte Stärke wurde durch Umsetzung ihrer OH-Gruppen mit Harnstoff, Alkylenoxiden sowie anderen Ether-, Ester-, Urethan-, Carbamat- oder Isocyanatbildenden Stoffen hergestellt. Bevorzugt sind Hydroxyalkyl-, Acetyl- oder Carbamatstärken oder deren Mischungen. Die erfindungsgemäss eingesetzte, chemisch modifizierte Stärke weist einen natürlichen Wassergehalt von etwa 5 bis 16 Gew.-% auf. Besonders bevorzugt ist ein Wassergehalt von 8 bis 12 Gew.-%. Der Substitutionsgrad der chemisch modifizierten Stärke beträgt 0,05 bis 0,3, bevorzugt 0,05 bis 0,1.

Der Amylosegehalt der eingesetzten chemisch modifizierten Stärke liegt bei 20 bis 100 Gew.-%, bevorzugt bei 50 bis 100 Gew.-%, besonders bevorzugt bei 65 bis 100 Gew.-%.

Der Weichmacher ist eine organische Verbindung mit mindestens einer Hydroxylgruppe, bevorzugt Polyol, besonders bevorzugt Sorbitol, Mannitol, D-Glukose, Glycerol, Polyethylenglykol, Ethylenglykol, Propylenglykol oder Mischungen davon. Er wird in Mengen von 4,8 bis 39,8 Gew.-Teilen, bevorzugt 9,8 bis 39,8 Gew.-Teilen, besonders bevorzugt 25 bis 30 Gew.-Teilen eingesetzt.

Erfindungsgemäss wird das Additiv, welches bevorzugt das bzw. die Emulgierhilfsmittel Harnstoff und/oder Harnstoffderivate oder Mischungen davon ist, mit dem Emulgator, welcher einen Hydrophil-Lipophil-Balance-Wert (HLB-Wert) von 0 bis 20, bevorzugt von 10 bis 20, besitzt, bei 30-90° bevorzugt bei 60°C vorhomogenisiert. Als Emulgatoren eignen sich erfindungsgemäss Metallstearate, Glycerolmonostearat, Polyoxyethylen(20)- Sorbitanmonolaurat, Polyoxyethylen(20)-Sorbitanmonopalmitat, Polyoxyethylen(40)-Stearat, Polyoxyethylen(100)-Stearat oder deren Mischung.

Die eingesetzten Emulgatormengen betragen 0,1 bis 2 Gew.-Teile, bevorzugt 0,1 bis 1 Gew.-Teile, besonders bevorzugt 0,2 Gew.-Teile.

Vom Emulgierhilfsmittel Harnstoff und/oder Harnstoffderivate oder deren Mischungen werden 0,1 bis 5 Gew.-Teile, bevorzugt 0,1 bis 2 Gew.-Teile, besonders bevorzugt 2 Gew.-Teile eingesetzt. Aber auch andere dem Stand der Technik entsprechende, für thermoplastische Werkstoffe übliche Additive können in Mengen von 0 bis 5 Gew.-Teile zugesetzt werden, die bevorzugt gemäss dem Stand der Technik eindosiert werden.

Im erfindungsgemässen Verfahren wird die Stärke-Weichmacher-Emulgator-Additiv-Mischung bzw. ihre Schmelze erhöhten Temperaturen von etwa 100°C bis etwa 170°C, bevorzugt 120°C bis 150°C, in Schritt d) einem verminderten Druck von etwa $2,5 \times 10^4$ Pa bis etwa $6 \times 10^4$ Pa (0,25 bis 0,6 bar), bevorzugt $4 \times 10^4$ Pa (0,4 bar), in Schritt e) einem erhöhtem Druck von etwa $2\times10^6$ Pa bis etwa $1\times10^7$ Pa (20 bis 100 bar), bevorzugt $3\times10^6$ bis $6\times10^6$ Pa (30 bis 60 bar), ausgesetzt.

Mit dem erfindungsgemässen Verfahren wird eine homogene, niedrigviskose, thermoplastisch verarbeitbare Stärkeschmelze hoher Schmelzestabilität mit einer Schmelzviskosität von 500 bis 30'000 Pa.s (160°C/236,4 N), bevorzugt 1'000 bis 20'000 Pa.s (160°C und 236,4 N), erhalten. Für besonders bevorzugte Anwendungen besitzt sie Schmelzviskositäten von 2'000 bis 10'000 Pa.s (160°C/236,4 N).

Eine erfindungsgemässe Vorrichtung zum Durchführen des erfindungsgemässen Verfahrens zur Herstellung einer homogenen, thermoplastisch verarbeitbaren Schmelze aus chemisch modifizierter Stärke, Weichmacher, Emulgator und Additiv, welches bevorzugt ein Emulgierhilfsmittel ist, besteht aus einem Extruder mit mehreren beheizbaren Zonen, dessen Schnecke für die Verfahrensschritte a) und b) aus Förderelementen, für den Verfahrensschritt c) aus Knet- und Rückstauelementen und für die Verfahrensschritte d) und e) aus Förderelementen besteht. Weiterhin muss ein für die Ausführung des erfindungsgemässen Verfahrens geeigneter Extruder für den Verfahrensschritt a) mindestens eine Dosiervorrichtung für Feststoffe, für den Verfahrensschritt b) einen Entgasungsstutzen und für den Verfahrensschritt e) eine Düse besitzen. Durch eine solche Düse beliebiger Geometrie wird eine erfindungsgemässe Schmelze entweder in eine Spritzgussform oder im Falle der Extrusionstechnik ins Freie gepresst, wo sie beliebig weiter verformt werden kann. Ein bevorzugter Extruder ist ein Doppelwellenextruder, der in besonders bevorzugter Weise gleichläufige, dichtkämmende Schnecken besitzt.

Erfindungswesentlich ist eine geschlossene, bevorzugt zweistufige, Knetkammer, die durch Rückstauelemente gebildet wird, und bevorzugt Knetelemente in Rechts- und/oder Linksausführung besitzt.

Für die Einarbeitung von dem Stand der Technik entsprechenden Additiven kann die Schnecke vor dem Entgasungsschritt weitere Knetelemente in konventioneller Anordnung besitzen.

Die erfindungsgemäss erhaltene homogene Stärkeschmelze kann zu thermoplastisch geformten Teilen weiterverarbeitet werden. Bevorzugterweise wird hierzu aus der Schmelze zuerst ein Granulat hergestellt, welches lagerstabil ist und zur Produktion von thermoplastisch geformten Teilen eingesetzt wird. Diese können durch Spritzgiessen, Blasformen, Extrusion, Koextrusion oder Spritzprägen hergestellt werden. Besonders bevorzugt ist hierbei die Herstellung von Granulaten, Filmen und Folien, Hohlkörpern oder Laminaten.

Erfindungsgemässe Stärkeschmelze besteht aus 95 bis 53,2 Gew.-Teilen, bevorzugt 90 bis 57,2 Gew.-Teilen, besonders bevorzugt 72,8 bis 67,8 Gew.-Teilen mindestens einer chemisch modifizierten Stärke, bevorzugt mindestens einer Hydroxyalkylstärke, 4,8 bis 39,8 Gew.-Teilen, bevorzugt 9,8 bis 39,8 Gew.-Teilen, besonders bevorzugt 25 bis 30 Gew.-Teilen mindestens eines Weichmachers, 0,1 bis 2 Gew.-Teilen, bevorzugt 0,1 bis 1 Gew.-Teilen, besonders bevorzugt 0,2 Gew.-Teilen mindestens eines Emulgators und 0,1 bis 5 Gew.-Teilen, bevorzugt 0,1 bis 2 Gew.-Teilen, besonders bevorzugt 0,2 Gew.-Teilen Harnstoff und/oder Harnstoffderivaten oder Mischungen hiervon.

In einer ganz speziellen Ausführungsform besteht erfindungsgemässe Stärkeschmelze aus 70 Gew.-Teilen mindestens einer Hydroxyalkylstärke, 27,8 Gew.-Teilen mindestens eines Weichmachers, 0,2 Gew.-Teilen mindestens eines Emulgators und 2,0 Gew.-Teilen Harnstoff.

In einer weiteren ganz speziellen Ausführungsform hat erfindungsgemässe Stärkeschmelze folgende Zusammensetzung:

80 Gew.-Teile mindestens einer Hydroxyalkylstärke, 18,8 Gew.-Teile mindestens eines Weichmachers, 0,2 Gew.-Teilen mindestens eines Emulgators und 1 Gew.-Teil Harnstoff.

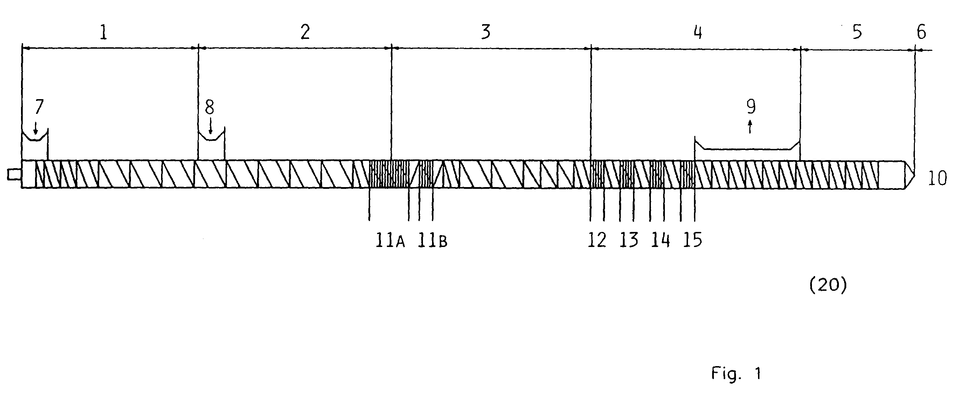

Fig. 1 zeigt eine mögliche Ausbildungsform der erfindungsgemässen Vorrichtung:

Die Nummer (1) bis (6) kennzeichnen die Zonen eines beispielhaften Doppelwellenextruders (20), welche geheizt werden können, (7) kennzeichnet die Eingabeöffnung in den Einzugsbereich, die mit zwei Feststoffdosiervorrichtungen bestückt sein kann, (8) eine zweite Zugabeöffnung für die Flüssigkeitsdosiervorrichtung, (9) die Extruderöffnung für den Entgasungsstutzen, (10) eine beliebige Düse, (11a) und (11b) eine zweistufige Knetkammer, (12) bis (15) weitere, nichterfindungswesentliche Knetzonen zur eventuellen Einarbeitung von dem Stand der Technik entsprechenden Additiven.

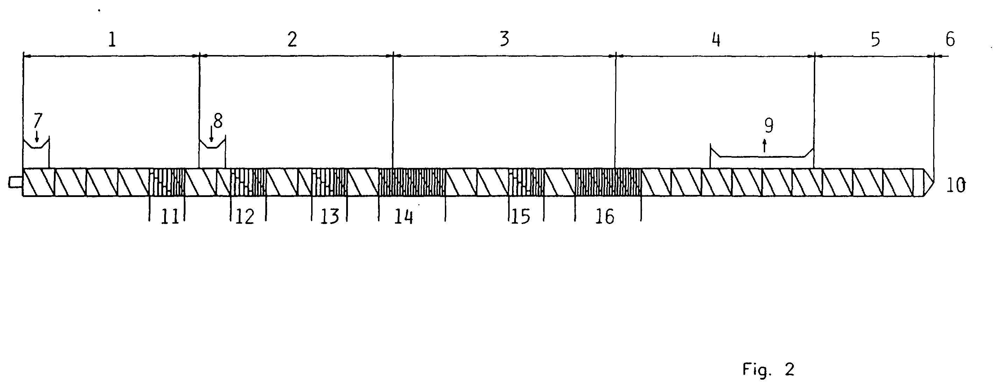

Fig. 2 zeigt zum Vergleich einen üblichen Doppelwellenextruder mit einer Schneckengeometrie gemäss dem Stand der Technik. Die Nummern (1) bis (6) kennzeichnen auch hier die Zonen des Extruders, (7) die Eingabeöffnung im Einzugsbereich, (8) eine zweite Zugabeöffnung, in der in der Kunststoffindustrie üblichen Weise die Additive zudosiert werden, (9) die Extruderöffnung für den Entgasungsstutzen, (10) eine beliebige Düse und (11) bis (16) verschiedene Knetzonen.

Im erfindungsgemässen Verfahren wird unter Benutzung der erfindungsgemässen Vorrichtung mindestens eine chemisch modifizierte Stärke über eine Feststoffdosiervorrichtung in den Einzugsbereich eines Extruders am Anfang der ersten Extruderzone eindosiert und mittels den Förderelementen der Schnecke in die geheizte zweite Zone des Extruders gefördert. Gleich am Anfang dieser zweiten Zone wird über eine Flüssigkeitsdosiervorrichtung eine ohne Fremdwasserzusatz vorhomogenisierte, flüssige Weichmacher-Emulgator-Additiv-Mischung zudosiert. Wird ein Weichmacher verwendet, der sich infolge seines hohen Schmelzpunktes bei 60°C nicht mit dem Emulgator und dem Additiv flüssig vorhomogenisieren lässt, so kann dieser alternativ neben der Stärke separat als Feststoff über eine zweite Feststoffdosiervorrichtung in den Einzugsbereich des Extruders eindosiert und mit der chemisch modifizierten Stärke zusammen in die zweite Extruderzone gefördert werden, in der dann die vorhomogenisierte, flüssige Emulgator-Additiv-Mischung zudosiert wird. Selbstverständlich ist bei der kombinierten Verwendung von Weichmachern mit hohen und niedrigen Schmelzpunkten auch die Kombination beider Dosierarten möglich. Anschliessend wird die chemisch modifizierte Stärke-Weichmacher-Emulgator-Additiv-Mischung mittels den Förderelementen der Schnecke in die zwischen der zweiten und dritten Extruderzone liegenden geschlossene Knetkammer gefördert. Diese Knetkammer wird durch Rückstauelemente begrenzt und ist bevorzugt zweistufig ausgebildet. In dieser Knetkammer erfolgt auf kleinstem Raum die intensive mechanische Bearbeitung der genannten Mischung. Dadurch werden die Schnecken von den hohen Drehmomenten, die bei Vorrichtungen dem Stand der Technik entsprechend auftreten, entlastet.

Nach erfolgtem Aufschluss der Stärkekörner und vollständiger Plastifizierung wird die homogene Schmelze nach der Knetkammer mittels den Förderungselementen der Schnecke zu der am Ende der geheizten vierten Extruderzone liegenden Entgasungsöffnung gefördert und bevorzugt durch Anlegen eines verminderten Druckes entgast. Nach Durchlaufen der geheizten fünften Extruderzone wird die homogene, thermoplastisch verarbeitbare Stärkeschmelze in der geheizten sechsten Extruderzone durch eine geeignete Düse gepresst, abgekühlt und granuliert oder geformt.

Vorteile des erfindungsgemässen Verfahrens sowie der erfindungsgemässen Stärkeschmelze sind:

- die Möglichkeiten der für Kunststoffe üblichen offenen Verfahrensweise ohne Beimischung von Fremdwasser
- die verbesserte Formstabilität und verminderte Schrumpfung der aus ihr hergestellten Produkte aufgrund ihrer hohen Erstarrungsgeschwindigkeit
- die guten mechanischen Eigenschaften, wie z.B. Flexibilität, da keine Versprödung eintritt
- die gute Lagerfähigkeit von z.B. hergestelltem Granulat aufgrund reduzierter Wasseraufnahme
- die hohe Schmelzestabilität bei niedrigen Schmelzviskositäten
- und damit die Möglichkeit, eine niedrigviskose Stärkeschmelze zu erzielen, ohne dass die zur Herstellung von Folien notwendige Zähigkeit herabgesetzt wird.

Vorteile der erfindungsgemässen Vorrichtung sind:

- Regulierungsmöglichkeit der Erstarrungsgschwindigkeit der Stärkeschmelze über einen definierten Staudruck vor der Düse aufgrund des Entgasungsschrittes
- Wirtschaftliche Durchsätze, da keine Schneckenblockierung durch zu hohe Drehmomente auftritt
- Vollständige Aufschliessung und Plastifizierung der Stärke auf kleinstem Raum in einer geschlossenen Knetkammer.

Die folgenden Beispiele erläutern die Erfindung, ohne sie darauf zu beschränken.

Der in den Beispielen genannte Wassergehalt wurde nach Karl-Fischer bestimmt und die Schmelzviskosität wurde bei 160°C und 236,4 N in einem Göttfert-Schmelzdurchflussviskosimeter gemessen. Zur Bestimmung der Schlagzähigkeit wurden aus dem Stärkegranulat Prüfkörper hergestellt und nach DIN 53 453 bei Raumtemperatur gemessen.

### Beispiel 1

Extrudereinstelldaten:

a) Extruderzonen:

(1) Raumtemperatur
(2) 130°C
(3) 130°C
(4) 100°C
(5) 100°C
(6) 150°C

b) Druck: Zone (6) (30-40 bar) $3 \times 10^6$ - $4 \times 10^6$ Pa
c) Drehmoment: 70 %
d) Unterdruck: (0,4 bar) $4 \times 10^4$ Pa.

In den Einzugsbereich (Extruderzone 1) eines gleichlaufenden, dichtkämmenden Doppelwellenextruders mit einer Schneckengeometrie gemäss Fig. 1 und einem Schneckenlängen-Durchmesserverhältniss von $\sqrt{40:1}$ wurden 70 Gew.-% Hydroxypropyl-Maisstärke mit einem Substitutionsgrad von 0,06 und einem Amylosegehalt von 50 Gew.-%

und 12,8 Gew.-% Sorbitol an der Stelle 7 von Fig. 1 separat eindosiert, im Extruder gleichzeitig vermischt und gefördert. 0,2 Gew.-% Magnesiumstearat wurden mit 2 Gew.-% Harnstoff bei 60°C in 15 Gew.-% Glycerol gelöst. Diese vorhomogenisierte Weichmacher-Emulgator-Additiv-Mischung wurde an der Stelle 8 von Fig. 1 in den Extruder (Zone 2) eindosiert, dann im Extruder gleichzeitig vermischt und weitergefördert. Nach dem Aufschliessen der Stärkekörner und vollständigem Plastifizieren der Stärkemischung in der Knetkammmer 11 (Extruderzonen 2 und 3) zu einer homogenen Schmelze, wurde die Stärkeschmelze durch Anlegen eines Unterdrucks an der Stelle 9 von Fig. 1 (Extruderzone 4) entgast. Nach Durchlaufen der Extruderzone (5) wurde die homogene, thermoplastisch verarbeitbare Stärkeschmelze in der Extruderzone (6) durch eine Düse als Strang mit geringer Strangaufweitung (Düse: 3 mm, Strang: 4 mm) extrudiert, abgekühlt und granuliert. Das gelbstichige Granulat hatte einen Wassergehalt von 5-8 Gew.-% gegenüber einem Wassergehalt der eingesetzten Stärke von 9-12 Gew.-%. Die so hergestellte homogene, thermoplastisch verarbeitbare Stärkeschmelze besitzt eine Schmelzviskosität von 3000 Pa.s bei 160°C und 236,4 N und eignete sich z. B. zur Herstellung von Folien auf eine in der Kunstoffindustrie üblichen Anlage bei 100-200°C.

**Beispiel 2**

Extruder-Vorrichtung, Extrudereinstelldaten, Verfahren, Weichmacher, Emulgator und Additiv wie in Beispiel 1 unter Verwendung von Hydroxyethyl-Kartoffelamylose mit einem Sustitutionsgrad von 0,1 (Amylosegehalt: 100 Gew.-%). Der austretende Extrusionsstrang zeigte keinerlei Strangaufweitung, das daraus hergestellte Granulat hatte einen Wassergehalt von 5-8 Gew.-% gegenüber dem Wassergehalt von 10 Gew.-% der eingesetzten Amylose.

Farbe :            glasklar
Schmelzvikosität :        2000 Pa.s (160°C / 236,4 N)
Schlagzähigkeit :         ohne Bruch

**Beispiel 3**

Extruder-Vorrichtung, Extrudereinstelldaten, Verfahren, Weichmacher, Emulgator und Additiv wie in Beispiel 1 unter Verwendung von Hydroxypropyl-Maisstärke mit einem Substitutionsgrad von 0,1 und einem Amylosegehalt von 70 Gew.-%. Der austretende Extrusionsstrang zeigte nur eine geringe Strangaufweitung (Düse: 3 mm, Strang: 4 mm), das daraus hergestellte Granulat hatte einen Wassergehalt von 5-8 Gew.-% gegenüber dem Wassergehalt von 9-12 Gew.-% der eingesetzten Stärke.

Farbe :            gelbschichtig
Schmelzviskosität :       2500 Pa.s (160°C / 236,4 N)
Schlagzähigkeit :         ohne Bruch

**Beispiel 4**

Extruder-Vorrichtung, Extrudereinstelldaten, Verfahren, Weichmacher, Emulgator und Additiv wie in Beispiel 1 unter Verwendung von 70 Gew.-% Hydroxypropyl-Maisstärke mit einem Substitutiongrad von 0,1 und einem Amylosegehalt von 20 Gew.-%. Der austretende Extrusionsstrang quillt stark auf (Düse: 3 mm, Strang: 6 mm), das daraus hergestellte Granulat hatte einen Wassergehalt von 5-8 Gew.-% gegenüber dem Wassergehalt von 9-12 Gew.-% der eingesetzten Stärke.

Farbe :            transparent
Schmelzviskosität :       6000 Pa.s (160°C / 236,4 N)
Schlagzähigkeit :         ohne Bruch

**Vergleichsbeispiel 1**

Extrudereinstelldaten:

a) Extruderzonen:

    (1) Raumtemperatur
    (2) 120°C
    (3) 100°C
    (4) 100°C

(5) 120°C
(6) 120°C

b) Druck: Zone (6): (30-40 bar) 3x10$^6$ - 4x10$^6$ Pa
c) Drehmoment : 115% (Durchsatz 6 kg/h)

Es wurde ein gleichlaufender, dichtkämmender Doppelwellenextruder mit 6 beheizbaren Extruderzonen (ZSK-30 von Werner & Pfleiderer) mit einer in der Kunststoffindustie üblichen Schneckengeometrie gemäss Fig. 2 und einem Schneckenlängen-Durchmesser-Verhältnis von $\sqrt{|40:1|}$ verwendet. 69 Gew.-% native Kartoffelstärke, 15 Gew.-% Glycerol, 15 Gew.-% Wasser und 1 Gew.-% Magnesiumstearat werden gemäss Stand der Technik in einem Intensivmischer vorgemischt und über eine Bandwaage gemäss Stand der Technik an der Stelle 7 von Fig. 2 in den Einzugsbereich (Zone 1) des Extruders dosiert und dem Stand der Technik entsprechend extrudiert. Dabei erforderte die Stärkemasse so hohe Drehmomente, dass die Schnecken blockiert wurden. Der austretende Extrusionsstrang enthält nicht-platifiziertes Stärkepulver und quillt and der Düse (Durchmesser: 3 mm) stark auf (Strangdurchmesser: 8 mm). Nach 24-stündigem Abkühlen bricht ein extrudierter Stärkestrang beim Biegen infolge Versprödung.

Schmelzviskosität :       nicht messbar (160°C / 236,4N)
Schlagzähigekeit :        nicht messbar
Farbe :                   glasklar

**Vergleichsbeispiel 2**

Extrudervorrichtung und Extrudereinstelldaten wie in Vergleichsbeispiel 1, aber Drehmoment 80-90 % (Durchsatz: 6 kg/h). Analog Vergleichsbeispiel 1, aber anstelle von Kartoffelstärke wurde Maisstärke mit einem Amylosegehalt von 70 Gew.-% eingesetzt. Der austretende Extrusionsstrang quillt auf (Düse: 3 mm, Strang: 6 mm) und enthält nicht-plastifiziertes Stärkepulver. Nach 24-stündigem Abkühlen bricht ein extrudierter Stärkestrang beim Biegen infolge Versprödung.

Farbe :                   braun, trübe
Schmelzviskosität :       nicht messbar ( 160°C / 236,4 N)
Schlagzähigkeit :         nicht messbar

**Vergleichsbeispiel 3**

Extrudervorrichtung und Extrudereinstelldaten wie in Vergleichsbeispiel 1, aber Drehmoment 100 % (Durchsatz 6 kg/h).
70 Gew.-% Maisstärke mit einem Amylosegehalt von 70 Gew.-% wurde an der Stelle 7 von Fig. 2 in den Einzugsbereich (Zone 1) des Extruders eindosiert. Nach Durchlaufen einer ersten Knetzone (11) wurde über eine Flüssigkeits-Dosiervorrichtung an der Stelle 8 von Fig. 2 (Extruderzone 2) 30 Gew.-% Glycerol zudosiert. In den folgenden Knetzonen (12) und (13) (Extruderzonen 2 und 3) wurde der Weichmacher in die Stärke eingearbeitet. In einer weiteren Knetzone (14) (Extruderzone 3) erfolgte der Ausschluss der Stärkekörner und die Plastifizierung.
Die weiteren Knetzonen (15) und (16) (Extruderzonen 3 und 4) vor der Entgasung (Extruderzone 4) ermöglichen die Einarbeitung von eventuell weiteren Additiven. Der austretende Extrusionsstrang war frei von Stärkepulvereinschlüssen und zeigte nur eine geringe Strangaufweitung (Düse: 3 mm, Strang: 4 mm). Der Strang blieb flexibel, es trat keine Versprödung auf. Das aus dem extrudierten Stärkestrang hergestellte Granulat hatte einen Wassergehalt von 5-7 Gew.-% gegenüber einem Wassergehalt von 10 Gew.-% der eingesetzten Maisstärke.

Farbe :                   trübe, gelbstichig
Schmelzviskosität :       nicht messbar ( 160°C / 236,4 N)
Schlagzähigkeit :         ohne Bruch

**Vergleichsbeispiel 4**

Extrudervorrichtung und Extrudereinstelldaten wie in Vergleichsbeispiel 3, aber Drehmoment 100 % (Durchsatz 6 kg/h).
70 Gew.-% Maisstärke mit einem Amylosegehalt von 70 Gew.-% und 15 Gew.-% Sorbitol wurden an der Stelle 7 von Fig. 2 separat in den Einzugsbereich (Zone 1) des Extruders eindosiert. Nach Durchlaufen einer ersten Knetzone (11) wurde über eine Flüssigkeits-Dosiervorrichtung an der Stelle 8 von Fig. 2 15 Gew.-% Glycerol eindosiert. Weiteres Verfahren wie in Vergleichsbeispiel 3. Strangaufweitung und Flexibilität des extrudierten Stärkestranges wie in Vergleichsbeispiel 3. Das hergestellte Granulat besass einen Wassergehalt von 6-8 Gew.-% gegenüber dem Wassergehalt der eingesetzten Maisstärke von 10 Gew.-%.

Farbe :                 trübe, gelbstichig
Schmelzviskosität :      nicht messbar (160°C / 236,4 N)
Schlagzähigkeit :        ohne Bruch

**Vergleichsbeispiel 5**

Extrudervorrichtung, Extrudereinstelldaten und Verfahren wie in Vergleichsbeispiel 3, aber Drehmoment > 115 % (Durchsatz 6 kg/h) und Einsatz von 80 Gew.-% Maisstärke mit einem Amylosegehalt von 70 Gew.-% und 20 Gew.-% Glycerol. Strangaufweitung und Flexibilität des extrudierten Stärkestranges wie in Vergleichsbeispiel 3. Die Stärkemasse erforderte jedoch so hohe Drehmomente, dass die Schnecken blockiert wurden. Strangaufweitung und Flexibilität des extrudierten Stärkestranges wie in Vergleichsbeispiel 3. Das hergestellte Granulat besass einen Wassergehalt von 5-7 Gew.-% gegenüber dem Wassergehalt der eingesetzten Maisstärke von 10 Gew.-%.

Farbe :                 trübe, gelbstichig
Schmelzviskosität :      nicht messbar ( 160°C / 236,4 N)
Schlagzähigkeit :        ohne Bruch

**Vergleichsbeispiel 6**

Extrudervorrichtung, Extrudereinstelldaten und Verfahren wie in Beispiel 1, aber ein Drehmoment von 50-70 % (Durchsatz 8 kg/h) und Verwendung einer Maisstärke mit einem Amylosegehalt von 70 Gew.-% sowie 15 Gew.-% Sorbitol und 15 Gew.-% Glycerol als Weichmacher. Strangaufweitung und Flexibilität des extrudierten Stärkestranges wie in Vergleichsbeispiel 3. Das hergestellte Granulat besass einen Wassergehalt von 5-8 Gew.-% gegenüber dem Wassergehalt der eingesetzten Maisstärke von 10 Gew.-%.

Farbe :                 gelbstichig, teilweise klar
Schmelzviskosität :      nicht messbar (160°C / 236,4 N)
Schlagzähigkeit :        ohne Bruch

**Vergleichsbeispiel 7**

Analog Vergleichsbeispiel 6, aber unter Verwendung einer Maisstärke mit einem Amylosegehalt von 50 Gew.-%. Strangaufweitung und Flexibilität des extrudierten Stärkestranges wie in Vergleichsbeispiel 6. Das hergestellte Granulat besass einen Wassergehalt von 5-8 Gew.-% gegenüber dem Wassergehalt der eingesetzten Maisstärke von 12 Gew.-%.

Farbe :                 gelbstichig, teilweise klar
Schmelzviskosität :      nicht messbar (160°C / 236,4 N)
Schlagzähigkeit :        6,3 kJ / m$^2$

**Vergleichsbeispiel 8**

Analog Vergleichsbeispiel 6, aber Verwendung einer Hydroxypropyl-Maisstärke mit einem Amylosegehalt von 50 Gew.-%. Strangaufweitung und Flexibilität des extrudierten Stärkederivatstranges wie Vergleichsbeispiel 6. Das hergestellte Granulat besass einen Wassergehalt von 5-8 Gew.-% gegenüber dem Wassergehalt der eingesetzten Hydroxypropyl-Maisstärke von 10 Gew.-%.

Farbe :                 gelbstichig, teilweise klar
Schmelzviskosität :      30'000 Pa.s ( 160°C / 236,4 N)
Schlagzähigkeit :        ohne Bruch

**Vergleichsbeispiel 9**

Analog Vergleichsbeispiel 8, aber mit einem Durchsatz von 8-9 kg/h und anstelle von 15 Gew.-% Sorbitol nur 14,8 Gew.-% Sorbitol und 0,2 Gew.-% Glycerolmonostearat. Strangaufweitung und Flexibilität des extrudierten Stärkestranges wie in Vergleichsbeispiel 6. Das hergestellte Granulat besass einen Wassergehalt von ca. 6 Gew.-% gegenüber dem Wassergehalt der eingesetzten Hydroxypropyl-Maisstärke von 10 Gew.-%.

Farbe :                        leicht gelbstichig, nahezu transparent
Schmelzviskosität :            15'000 Pa.s (160°C / 236,4 N)
Schlagzähigkeit :              ohne Bruch

**Vergleichsbeispiel 10**

Herstellung einer Schmelze unter Verwendung des Extruders von Vergleichsbeispiel 1, aber den Extrudereinstelldaten und dem Verfahren sowie der chemisch modifizierten Stärke, Weichmacher, Emulgator und Additiv von Beispiel 1. Dabei erforderte die Stärkemasse so hohe Drehmomente, dass die Schnecken blockiert wurden. Die sehr dünnflüssige Schmelze eignete sich nicht zur Granulatherstellung.

Farbe :                        klar, gelbstichig
Schmelzviskosität :            500 Pa.s (160°C / 236,4 N)
Schlagzähigkeit :              nicht messbar

**Vergleichsbeispiel 11**

Herstellung einer Schmelze aus 60 Gew.-% Hydroxypropyl-Maisstärke mit einem Substitutionsgrad von 0,06 und einem Amylosegehalt von 50 Gew.-% und 40 Gew.-% Glycerol unter Verwendung des Extruders von Beispiel 1. Die sehr dünnflüssige Schmelze war sehr klebrig und erstarrte nach dem Abkühlen nicht. Die Herstellung von Granulat war daher nicht möglich.

Farbe :                        klar, gelbstichig
Schmelzviskosität :            2'000 Pa.s ( 160°C / 236,4 N)
Schlagzähigkeit :              nicht messbar

**Vergleichsbeispiel 12**

Extrudervorrichtung und Extrudereinstelldaten wie in Vergleichsbeispiel 1, aber Drehmoment 100 % (Durchsatz 6 kg/h). 12,8 Gew.-% Sorbitol, 0,2 Gew.-% Magnesiumstearat und 2 Gew.-% Harnstoff wurden vorgemischt, dann mit 70 Gew.-% Hydroxypropyl-Maisstärke mit einem Substitutionsgrad von 0,06 und einem Amylosegehalt von 50 Gew.-% an der Stelle 7 von Fig. 2 mit zwei separaten Dosierbandwaagen in den Einzugsbereich (Extruderzone 1) eindosiert. Nach Durchlaufen einer ersten Knetzone (11) wurde über eine Flüssigkeits-Dosiervorrichtung an der Stelle 8 von Fig. 2 (Extruderzone 2) 15 Gew.-% Glycerol zudosiert. Weiteres Verfahren wie in Vergleichsbeispiel 3. Der so erhaltene Extrusionsstrang (konventionelle Dosierung mit konventioneller Vorrichtung) ist nur über kurze Bereiche flexibel und enthält zwischendurch immer wieder spröde Stellen. Das hieraus hergestellte Granulat (Wassergehalt 5-7 Gew.-% gegenüber dem Wassergehalt der eingesetzten Stärke von 9-12 Gew.-%) war für eine thermoplastische Verarbeitung unbrauchbar.

Farbe :                        transparent, gelbstichig
Schmelzviskosität :            2'000 Pa.s (160°C / 236,4 N)
Schlagzähigkeit :              ------

**Patentansprüche**

1. Verfahren zur Herstellung einer homogenen, thermoplastisch verarbeitbaren Schmelze aus chemisch modifizierter Stärke, Weichmacher und weiteren Additiven bei hinreichend erhöhten Temperaturen und Drücken, dadurch gekennzeichnet, daß das Verfahren folgende Schritte umfaßt:

   a) Eindosieren einer chemisch modifizierten Stärke in den Einzugsbereich eines Extruders und deren Förderung,

b) Zudosieren einer ohne Fremdwasserzusatz vorhomogenisierten, flüssigen Weichmacher-Emulgator-Additiv-Mischung, deren Vermischung mit der Stärke bei gleichzeitiger Förderung der Stärke-Weichmacher-Emulgator-Additiv-Mischung,

c) Aufschließen der Stärkekörner ohne Beimischung von Fremdwasser und vollständige Plastifizierung der genannten Mischung zu einer homogenen, thermoplastisch verarbeitbaren Schmelze und deren Förderung,

d) Entgasen der Schmelze und deren weitere Förderung,

e) Auspressen der Schcmelze durch eine Düse,

wobei in den Schritten b) bis e) die genannte Mischung bzw. Schmelze erhöhten Temperaturen von 100°C bis 170°C, in Schritt d) einem verminderten Druck von $2,5 \times 10^4$ Pa bis $6 \times 10^4$ Pa und in Schritt e) einem erhöhten Druck von $2 \times 10^6$ Pa bis $1 \times 10^7$ Pa ausgesetzt wird, wobei der Extruder derart ausgestaltet ist, daß die Schnecke für die Verfahrensschritte a) und b) aus Förderelementen, für den Verfahrensschritt c) aus Knet- und Rückstauelementen und für die Verfahrensschritte d) und e) aus Förderelementen besteht, wobei durch die Rückstauelemente eine geschlossene Knetkammer gebildet wird.

2. Verfahren zur Herstellung einer homogenen, thermoplastisch verarbeitbaren Schmelze aus chemisch modifizierter Stärke, Weichmacher und weiteren Additiven bei hinreichend erhöhten Temperaturen und Drücken, dadurch gekennzeichnet, daß das Verfahren folgende Schritte umfaßt:

a) Separates Eindosieren einer chemisch modifizierten Stärke und mindestens eines Weichmachers in den Einzugsbereich eines Extruders, deren Vermischung und Förderung,

b) Zudosieren einer ohne Fremdwasserzusatz vorhomogenisierten, flüssigen Emulgator-Additiv-Mischung, deren Vermischung mit der Stärke-Weichmacher-Mischung bei gleichzeitiger Förderung der Stärke-Weichmacher-Emulgator-Additiv-Mischung,

c) Aufschließen der Stärkekörner ohne Beimischung von Fremdwasser und vollständige Plastifizierung der genannten Mischung zu einer homogenen, thermoplastisch verarbeitbaren Schmelze und deren Förderung,

d) Entgasen der Schmelze und deren weitere Förderung,

e) Auspressen der Schmelze durch eine Düse,

wobei in den Schritten b) bis e) die genannte Mischung bzw. Schmelze erhöhten Temperaturen von 100°C bis 170°C, in Schritt d) einem verminderten Druck von $2,5 \times 10^4$ Pa bis $6 \times 10^4$ Pa und in Schritte) einem erhöhten Druck von $2 \times 10^6$ Pa bis $1 \times 10^7$ Pa ausgesetzt wird, wobei der Extruder derart ausgestaltet ist, daß die Schnecke für die Verfahrensschritte a) und b) aus Förderelementen, für den Verfahrensschritt c) aus Knet- und Rückstauelementen und für die Verfahrensschritte d) und e) aus Förderelementen besteht, wobei durch die Rückstauelemente eine geschlossene Knetkammer gebildet wird.

3. Verfahren gemäss den Ansprüchen 1 und 2, dadurch gekennzeichnet, dass in den Schritten b) bis e) die genannte Mischung bzw. Schmelze erhöhten Temperaturen von 120°C bis 150°C, in Schritt d) einem verminderten Druck von $4 \times 10^4$ Pa, und in Schritt e) einem erhöhten Druck von $3 \times 10^6$ Pa bis $6 \times 10^6$ Pa, ausgesetzt wird.

4. Verfahren gemäss den Ansprüchen 1 bis 3, dadurch gekennzeichnet, dass in Schritt a) mindestens ein Weichmacher in fester Form und in Schritt b) mindestens ein Weichmacher in flüssiger Form als Bestandteil der vorhomogenisierten, flüssigen Weichmacher-Emulgator-Additiv-Mischung eindosiert wird.

5. Verfahren gemäss einem der Ansprüche 1 bis 4, dadurch gekennzeichnet, dass mindestens eine chemisch modifizierte Stärke mit einem natürlichen Wassergehalt von 5 bis 16 Gew.-%, eingesetzt wird.

6. Verfahren gemäss einem der Ansprüche 1 bis 5, dadurch gekennzeichnet, dass eine chemisch modifizierte Stärke mit einem Amylosegehalt von 20 bis 100 Gew.-%, eingesetzt wird.

7. Verfahren gemäss einem der Ansprüche 1 bis 6, dadurch gekennzeichnet, dass eine durch Umsetzung ihrer OH-Gruppen mit Harnstoff und/oder Alkylenoxiden und/ oder anderen Ether-, Ester-, Urethan-, Carbamat- oder Isocyanat-bildenden Stoffen hergestellte chemisch modifizierte Stärke oder deren Mischungen eingesetzt wird bzw. werden.

8. Verfahren gemäss Anspruch 7, dadurch gekennzeichnet, dass als chemisch modifizierte Stärke eine Hydroxyalkyl-, Acetyl-, Carbamatstärke oder deren Mischung(en) eingesetzt wird bzw. werden.

9. Verfahren gemäss den Ansprüchen 7 und 8, dadurch gekennzeichnet, dass als chemisch modifizierte Stärke eine Stärke mit einem Substitionsgrad von 0,05 bis 0,3 eingesetzt wird.

10. Verfahren gemäss den Ansprüchen 1 bis 4, dadurch gekennzeichnet, dass die vorhomogenisierte flüssige Komponenten-Mischung bei ca. 60°C vorhomogenisiert wurde.

11. Verfahren gemäss Anspruch 4, dadurch gekennzeichnet, dass mindestens ein Weichmacher mit einem Schmelzpunkt kleiner als 60°C eingesetzt wird.

12. Verfahren gemäss Anspruch 4, dadurch gekennzeichnet, dass mindestens ein Weichmacher mit einem Schmelzpunkt grösser als 60°C eingesetzt wird.

13. Verfahren gemäss einem der Ansprüche 1 bis 12, dadurch gekennzeichnet, dass als Weichmacher eine organische Verbindung mit mindestens einer Hydroxylgruppe, eingesetzt wird bzw. werden.

14. Verfahren gemäss einem der Ansprüche 1 bis 13, dadurch gekennzeichnet, dass der Weichmacher in Mengen von 4,8 bis 39,8 Gew.-Teilen, jeweils bezogen auf 100 Gew.-Teile Gesamtmischung, eingesetzt wird.

15. Verfahren gemäss einem der Ansprüche 1 bis 14, dadurch gekennzeichnet, dass als Additiv(e) Harnstoff und/oder Harnstoffderivate oder Mischungen davon in Mengen von 0,1 bis 5 Gew.-Teilen, bezogen auf 100 Gew.-Teile Gesamtmischung, eingesetzt wird (werden).

16. Verfahren nach den Ansprüchen 1 bis 15, dadurch gekennzeichnet, dass mindestens ein Emulgator mit einem HLB-Wert von 0 bis 20 20, eingesetzt wird.

17. Verfahren gemäss einem der Ansprüche 1 bis 16, dadurch gekennzeichnet, dass als Emulgator ein Metallstearat, Glycerolmonostearat, Polyoxyethylen (20)-Sorbitanmonolaurat, Polyoxyethylen (20)-Sorbitanmonopalmitat, Polyoxyethylen (40)-Stearat, Polyoxyethylen (100)-Stearat oder deren Mischung(en) eingesetzt wird (werden).

18. Verfahren gemäss einem der Ansprüche 1 bis 17, dadurch gekennzeichnet, dass der Emulgator in Mengen von 0,1 bis 2 Gew.-Teilen jeweils bezogen auf 100 Gew.-Teile Gesamtmischung eingesetzt wird.

19. Verfahren gemäss einem der Ansprüche 1 bis 18, dadurch gekennzeichnet, dass man die erhaltene homogene, thermoplastisch verarbeitbare, niedrigviskose Stärkeschmelze zu lagerstabilem Granulat weiterverarbeitet und/oder thermoplastisch geformte Teile daraus hergestellt.

20. Verfahren gemäss Anspruch 19, dadurch gekennzeichnet dass die thermoplastisch geformten Teile durch Spritzgiessen, Blasformen, Extrusion, Koextrusion oder Spritzprägen hergestellt werden.

21. Verfahren gemäss Anspruch 19, dadurch gekennzeichnet, dass man das lagerstabile Granulat zu Filmen und Folien, Hohlkörpern oder Laminaten weiterverarbeitet.

22. Vorrichtung zum Durchführen des Verfahrens gemäss einem der Ansprüche 1 bis 21, dadurch gekennzeichnet, dass sie aus einem Extruder (20) mit mehreren heizbaren Zonen besteht, dessen Schnecke für die Verfahrensschritte a) und b) aus Förderelementen, für den Verfahrensschritt c) aus Knet- und Rückstauelementen und für die Verfahrensschritte d) und e) aus Förderelementen besteht.

23. Vorrichtung gemäss Anspruch 22, dadurch gekennzeichnet, dass der Extruder für den Verfahrensschritt a) mindestens eine separate Dosiervorrichtung für Feststoffe, für den Verfahrenschritt b) eine Flüssigkeitsdosierungsvorrichtung, für den Verfahrensschritt d) einen Entgasungsstutzen und für den Verfahrensschritt e) eine Düse besitzt.

24. Vorrichtung gemäss den Ansprüchen 22 und 23, dadurch gekennzeichnet, dass der Extruder ein Doppelwellenextruder ist.

25. Vorrichtung gemäss den Ansprüchen 22 bis 24, dadurch gekennzeichnet, dass durch Rückstauelemente eine geschlossene, bevorzugt zweistufige, Knetkammer gebildet wird.

**26.** Vorrichtung gemäss den Ansprüchen 22 bis 25, dadurch gekennzeichnet, dass die geschlossene Knetkammer Knetelemente in Rechts- und/oder Linksausführung besitzt.

**27.** Vorrichtung gemäss den Ansprüchen 22 bis 26, dadurch gekennzeichnet, dass die Schnecke vor dem Verfahrensschritt d) weitere Knetelemente zur Einarbeitung von weiteren Additiven besitzt.

**28.** Homogene, thermoplastisch verarbeitbare Stärkeschmelze herstellbar nach dem Verfahren gemäss einem der Ansprüche 1 bis 21, dadurch gekennzeichnet, dass sie aus 95 bis 53,2 Gew.-Teilen, mindestens einer chemisch modifizierten Stärke, 4,8 bis 39,8 Gew.-Teilen, mindestens eines Weichmachers, 0,1 bis 2 Gew.-Teilen mindestens eines Emulgators und 0,1 bis 5 Gew.-Teilen, Harnstoff und/oder Harnstoffderivaten oder Mischungen davon, bezogen auf die Gesamtmischung, besteht.

**29.** Thermoplastisch verarbeitbare Stärkeschmelze gemäss Anspruch 28, dadurch gekennzeichnet, dass sie aus 70 Gew.-Teilen mindestens einer Hydroxyalkylstärke, 27,8 Gew.-Teilen mindestens eines Weichmachers, 0,2 Gew.-Teilen mindestens eines Emulgators und 2,0 Gew.-Teilen Harnstoff und/oder Harnstoffderivaten oder Mischungen davon, bezogen auf die Gesamtmischung, besteht.

**30.** Stärkeschmelze gemäss Anspruch 28, dadurch gekennzeichnet, dass sie aus 80 Gew.-Teilen mindestens einer Hydroxyalkylstärke, 18,8 Gew.-Teilen mindestens eines Weichmachers, 0,2 Gew.-Teilen mindestens eines Emulgators und 1 Gew.-Teil Harnstoff und/oder Harnstoffderivaten oder Mischungen davon, bezogen auf die Gesamtmischung, besteht.

**31.** Homogene, niedrigviskose, thermoplastisch verarbeitbare Stärkeschmelze gemäss Anspruch 28, dadurch gekennzeichnet, dass sie eine hohe Schmelzstabilität und eine Schmelzviskosität von 500 bis 30'000 Pa.s, gemessen bei 160°C und 236,4 N in einem Göttfert-Schmelzflussviskosimeter, aufweist.

**Claims**

**1.** Process for producing a homogeneous, thermoplastically processable melt from chemically modified starch, plasticizer and further additives at sufficiently raised temperatures and pressures, characterized in that the process comprises the following steps:

a) dosing a chemically modified starch into the feed zone of an extruder and the conveying thereof,
b) dosing of a liquid plasticizer-emulsifier-additive mixture, prehomogenized without external water addition, the mixing thereof with the starch, accompanied by simultaneous conveying of the starch-plasticizer-emulsifier-additive mixture,
c) hydrolysis of the starch particles without the admixing of external water and complete plasticizing of said mixture to a homogeneous, thermoplastically processable melt and the conveying thereof,
d) degassing the melt and the further conveying thereof,
e) pressing the melt through a die,

whereby in steps b) to e) said mixture or melt is exposed to elevated temperatures of 100 to 170°C, in step d) to a reduced pressure of 2.5 x $10^4$ Pa to 6 x $10^4$ Pa and in step e) to an increased pressure of 2 x $10^6$ Pa to 1 x $10^7$ Pa, the extruder being designed in such a way that the screw for the process steps a) and b) comprises conveyor elements, for process step c) kneading and back pressure elements and for process steps d) and e) from conveyor elements, the back pressure elements forming a closed kneading chamber.

**2.** Process for producing a homogeneous, thermoplastically processable melt from chemically modified starch, plasticizer and further additives at sufficiently raised temperatures and pressures, characterized in that the process comprises the following steps:

a) separate dosing in of a chemically modified starch and at least one plasticizer into the feed zone of an extruder, the mixing thereof and conveying,
b) dosing in of a liquid emulsifier-additive mixture prehomogenized without external water addition, the mixing thereof with the starch-plasticizer mixture, accompanied by the simultaneous conveying of the starch-plasticizer-emulsifier-additive mixture,
c) hydrolysis of the starch particles without the admixing of external water and complete plasticizing of said mixture to a homogeneous, thermoplastically processable melt and the conveying thereof,
d) degassing the melt and the further conveying thereof,
e) pressing the melt through a die,

whereby in steps b) to e) said mixture or melt is exposed to elevated temperatures of 100 to 170°C, in step d) to a reduced pressure of $2.5 \times 10^4$ Pa to $6 \times 10^4$ Pa and in step e) to an increased pressure of $2 \times 10^6$ Pa to $1 \times 10^7$ Pa the extruder being designed in such a way that the screw for the process steps a) and b) comprises conveyor elements, for process step c) kneading and back pressure elements and for process steps d) and e) from conveyor elements, the back pressure elements forming a closed kneading chamber.

3. Process according to claims 1 and 2, characterized in that in steps b) to e) the said mixture or melt is exposed to elevated temperatures of 120 to 150°C, in step d) to a reduced pressure of $4 \times 10^4$ Pa and in step e) to an increased pressure of $3 \times 10^6$ Pa to $6 \times 10^6$ Pa.

4. Process according to claims 1 to 3, characterized in that in step a) at least one plasticizer in solid form and in step b) at least one plasticizer in liquid form is dosed in as a constituent of the prehomogenized, liquid plasticizer-emulsifier-additive mixture.

5. Process according to one of the claims 1 to 4, characterized in that at least one chemically modified starch with a natural water content of 5 to 16 wt.% is used.

6. Process according to one of the claims 1 to 5, characterized in that a chemically modified starch with an amylose content of 20 to 100 wt.% is used.

7. Process according to one of the claims 1 to 6, characterized in that a chemically modified starch or mixtures thereof produced by reacting its OH-groups with urea and/or alkylene oxides and/or other ether, ester, urethane, carbamate or isocyanate-forming substances is used.

8. Process according to claim 7, characterized in that a hydroxyalkyl, acetyl, carbamate starch or mixtures thereof is used as the chemically modified starch.

9. Process according to claims 7 and 8, characterized in that a starch with a degree of substitution of 0.05 to 0.3 is used as the chemically modified starch.

10. Process according to claims 1 to 4, characterized in that the prehomogenized, liquid component mixture is prehomogenized at approximately 60°C.

11. Process according to claim 4, characterized in that at least one plasticizer with a melting point below 60°C is used.

12. Process according to claim 4, characterized in that at least one plasticizer with a melting point above 60°C is used.

13. Process according to one of the claims 1 to 12, characterized in that as the plasticizer is used an organic compound with at least one hydroxyl group.

14. Process according to one of the claims 1 to 13, characterized in that the plasticizer is used in quantities of 4.8 to 39.8 wt. parts, in each case based on 100 wt. parts total mixture.

15. Process according to one of the claims 1 to 14, characterized in that as additives are used urea and/or urea derivatives or mixtures thereof in quantities of 0.1 to 5 wt. parts, based on 100 wt. parts total mixture.

16. Process according to claims 1 to 15, characterized in that at least one emulsifier with a HLB value of 0 to 20 is used.

17. Process according to one of the claims 1 to 16, characterized in that as the emulsifier is used a metal stearate, glycerol monostearate, polyoxyethylene(20)-sorbitan monolaurate, polyoxyethylene(20)-sorbitan monopalmitate, polyoxyethylene(40)-stearate, polyoxyethylene(100)-stearate or mixtures thereof are used.

18. Process according to one of the claims 1 to 17, characterized in that the emulsifier is used in quantities of 0.1 to 2 wt. parts, in each case based on 100 wt. parts total mixture.

19. Process according to one of the claims 1 to 18, characterized in that the homogeneous, thermoplastically processable, low viscosity starch melt obtained is further processed to storage-stable granular material and/or thermoplastically shaped parts are produced therefrom.

20. Process according to claim 19, characterized in that the thermoplastically shaped parts are produced by injection moulding, blow moulding, extrusion, coextrusion or injection stamping.

21. Process according to claim 19, characterized in that the storage-stable granular material is further processed to films, foils, hollow bodies or laminates.

22. Apparatus for performing the process according to one of the claims 1 to 21, characterized in that it comprises an extruder (20) with several heatable zones, whose screws for the process steps a) and b) comprise conveyor elements, for process step c) kneading and back pressure elements and for process steps d) and e) from conveyor elements.

23. Apparatus according to claim 22, characterized in that the extruder for process step a) has at least one separate dosing device for solids, for process step b) a liquid dosing device, for process step d) a degassing connection and for process step e) a die.

24. Apparatus according to claims 22 and 23, characterized in that the extruder is a double-shaft extruder.

25. Apparatus according to claims 22 to 24, characterized in that a closed, preferably two-stage kneading chamber is formed by back pressure elements.

26. Apparatus according to claims 22 to 25, characterized in that the closed kneading chamber has kneading elements in right and/or left construction.

27. Apparatus according to claims 22 to 26, characterized in that, upstream of process step d), the screw has further kneading elements for incorporating further additives.

28. Homogeneous, thermoplastically processable starch melt producable according to the process according to one of the claims 1 to 21, characterized in that it comprises 95 to 53.2 wt. parts of at least one chemically modified starch, 4.8 to 39.8 wt. parts of at least one plasticizer, 0.1 to 2 wt. parts of at least one emulsifier and 0.1 to 5 wt. parts urea and/or urea derivatives or mixtures thereof, based on the total mixture.

29. Thermoplastically processable starch melt according to claim 28, characterized in that it comprises 70 wt. parts of at least one hydroxyalkyl starch, 27.8 wt. parts of at least one plasticizer, 0.2 wt. parts of at least one emulsifier and 2.0 wt. parts of urea and/or urea derivatives or mixtures thereof, based on the total mixture.

30. Starch melt according to claim 28, characterized in that it comprises 80 wt. parts of at least one hydroxyalkyl starch, 18.8 wt. parts of at least one plasticizer, 0.2 wt. parts of at least one emulsifier and 1 wt. part urea and/or urea derivatives or mixtures thereof, based on the total mixture.

31. Homogeneous, low viscosity, thermoplastically processable starch melt according to claim 28, characterized in that it has a high melting stability and a melting viscosity of 500 to 30,000 Pa.s, measured at 160°C and 236.4 N in a Göttfert melt flow viscosimeter.

**Revendications**

1. Procédé pour la préparation d'une fonte transformable de façon thermoplastique, homogène, d'amidon chimiquement modifié et d'autres adjuvants, à des températures et des pressions suffisamment élevées, caractérisé en ce que le procédé comprend les étapes suivantes :

a) introduction d'une quantité déterminée d'un amidon chimiquement modifié à l'entrée d'une extrudeuse et transport de cet amidon,
b) addition d'une quantité déterminée d'un mélange liquide, préhomogénéisé, sans ajout d'eau extérieure, plastifiant-émulsifiant-adjuvant, mélange de celui-ci avec l'amidon avec transport simultané du mélange amidon-plastifiant-émulsifiant-adjuvant,

c) dissolution des grains d'amidon sans apport d'eau extérieure et plastification complète dudit mélange en une fonte transformable de façon thermoplastique, homogène, et transport de cette fonte,

d) dégazage de la fonte et poursuite de son transport,

e) extrusion de la fonte à travers une filière,

dans lequel, dans les étapes b) à e), ledit mélange ou ladite fonte sont exposés à des températures élevées de 100°C à 170°C, dans l'étape d) à une pression réduite de 2,5 x 10$^4$ Pa à 6 x 10$^4$ Pa, et dans l'étape e) à une pression élevée de 2 x 10$^6$ Pa à 1 x 10$^7$ Pa, l'extrudeuse étant conçue de façon que la vis sans fin soit constituée, pour les étapes de traitement a) et b), d'éléments de transport, pour l'étape de traitement c), d'éléments de pétrissage et de retenue, et pour les étapes de traitement d) et e), d'éléments de transport, les éléments de retenue formant une chambre de pétrissage fermée.

**2.** Procédé pour la préparation d'une fonte transformable de façon thermoplastique, homogène, d'amidon chimiquement modifié, de plastifiant et d'autres adjuvants, à des températures et des pressions suffisamment élevées, caractérisé en ce que le procédé comprend les étapes suivantes :

a) introduction séparée d'une quantité réglée d'un amidon chimiquement modifié et d'au moins un plastifiant à l'entrée d'une extrudeuse, mélange et transport de ces produits,

b) addition d'une quantité réglée d'un mélange liquide, préhomogénéisé, sans ajout d'eau extérieure, émulsifiant-adjuvant, mélange de celui-ci avec le mélange amidon-plastifiant avec transport simultané du mélange amidon-plastifiant-émulsifiant-adjuvant,

c) dissolution des grains d'amidon sans apport d'eau extérieure et plastification complète dudit mélange en une fonte transformable de façon thermoplastique, homogène, et transport de cette fonte,

d) dégazage de la fonte et poursuite de son transport,

e) extrusion de la fonte à travers une filière,

dans lequel, dans les étapes b) à e), ledit mélange ou ladite fonte sont exposés à des températures élevées de 100°C à 170°C, dans l'étape d) à une pression réduite de 2,5 x 10$^4$ Pa à 6 x 10$^4$ Pa et dans l'étape e) à une pression élevée de 2 x 10$^6$ Pa à 1 x 10$^7$ Pa, l'extrudeuse étant conçue de façon que la vis sans fin soit constituée, pour les étapes de transport a) et b), d'éléments de transport, pour l'étape de traitement c), d'éléments de pétrissage et de retenue, et pour les étapes de traitement d) et e), d'éléments de transport, les éléments de retenue formant une chambre de pétrissage fermée.

**3.** Procédé selon les revendications 1 et 2, caractérisé en ce que, dans les étapes b) à e), ledit mélange ou ladite fonte sont soumis à des températures élevées de 120°C à 150°C, dans l'étape d) à une pression réduite de 4 x 10$^4$ Pa, et dans l'étape e) à une pression élevée de 3 x 10$^6$ Pa à 6 x 10$^6$ Pa.

**4.** Procédé selon les revendications 1 à 3, caractérisé en ce que, dans l'étape a), on introduit une quantité déterminée d'au moins un plastifiant sous forme solide, et dans l'étape b), on introduit une quantité déterminée d'au moins un plastifiant sous forme liquide, comme composant du mélange liquide, préhomogénéisé, plastifiant-émulsifiant-adjuvant.

**5.** Procédé selon les revendications 1 à 4, caractérisé en ce qu'on utilise au moins un amidon chimiquement modifié ayant une teneur naturelle en eau de 5 à 16 % en poids.

**6.** Procédé selon les revendications 1 à 5, caractérisé en ce qu'on utilise un amidon chimiquement modifié ayant une teneur en amylose de 20 à 100 % en poids.

**7.** Procédé selon les revendications 1 à 6, caractérisé en ce qu'on utilise un amidon chimiquement modifié, préparé par conversion de ses groupes OH avec de l'urée et/ou des oxydes d'alkylène et/ou d'autres substances formant des éthers, des esters, des uréthannes, des carbamates ou des isocyanates, ou des mélanges de tels amidons.

**8.** Procédé selon la revendication 7, caractérisé en ce qu'on utilise, comme amidon chimiquement modifié, un amidon hydroxyalkylé, acétylé ou un carbamate d'amidon ou un (ou des) mélange(s) de ces amidons.

**9.** Procédé selon les revendications 7 et 8, caractérisé en ce qu'on utilise, comme amidon chimiquement modifié, un amidon comportant un degré de substitution de 0,05 à 0,3.

10. Procédé selon les revendications 1 à 4, caractérisé en ce que le mélange de composants, liquide, préhomogénéisé est préhomogénéisé à environ 60°C.

11. Procédé selon la revendication 4, caractérisé en ce qu'on utilise au moins un plastifiant ayant un point de fusion inférieur à 60°C.

12. Procédé selon la revendication 4, caractérisé en ce qu'on utilise au moins un plastifiant ayant un point de fusion supérieur à 60°C.

13. Procédé selon l'une des revendications 1 à 12, caractérisé en ce que, comme plastifiant, on utilise un composé organique comportant au moins un groupe hydroxyle.

14. Procédé selon l'une des revendications 1 à 13, caractérisé en ce que le plastifiant est utilisé en des quantités comprises entre 4,8 et 39,8 parties en poids, rapportées chaque fois à 100 parties en poids du mélange total.

15. Procédé selon l'une des revendications 1 à 14, caractérisé en ce que, comme adjuvant(s), on utilise de l'urée et/ ou des dérivés de l'urée ou leurs mélanges, en des quantités comprises entre 0,1 et 5 parties en poids, rapportées à 100 parties en poids du mélange total.

16. Procédé selon les revendications 1 à 15, caractérisé en ce qu'on utilise au moins un émulsifiant ayant une valeur HLB comprise entre 0 et 20.

17. Procédé selon les revendications 1 à 16, caractérisé en ce que, comme émulsifiant on utilise un stéarate de métal, un monostérarate de glycérol, un polyoxyéthylène (20)-sorbitanemonolaurate, un polyoxyéthylène (20)-sorbitanemonopalmitate, un polyoxyéthylène (40)-stéarate, un polyoxyéthylène (100)-stéarate, ou leur(s) mélange(s).

18. Procédé selon l'une des revendications 1 à 17, caractérisé en ce qu'on utilise l'émulsifiant en des quantités comprises entre 0,1 et 2 parties en poids rapportées à 100 parties en poids du mélange total.

19. Procédé selon l'une des revendications 1 à 18, caractérisé en ce qu'on poursuit la transformation de la fonte d'amidon faiblement visqueuse, transformable de façon thermoplastique, homogène, obtenue, en granulat stable au stockage et/ou en ce qu'on fabrique, à partir de cette fonte, des pièces thermoplastiquement formées.

20. Procédé selon la revendication 19, caractérisé en ce qu'on fabrique des pièces thermoplastiquement formées par injection, soufflage, extrusion, coextrusion ou moulage par injection-compression.

21. Procédé selon la revendication 19, caractérisé en ce qu'on poursuit la transformation du granulat stable au stockage jusqu'à obtenir des films et des feuilles, des corps creux ou des laminés.

22. Appareil pour la mise en oeuvre du procédé selon les revendications 1 à 21, caractérisé en ce qu'il consiste en une extrudeuse (20) comportant plusieurs zones chauffables, dont la vis sans fin est constituée, pour les étapes de traitement a) et b), d'éléments de transport, pour l'étape de traitement c) d'éléments de pétrissage et de retenue, et pour les étapes de traitement d) et e), d'éléments de transport.

23. Appareil selon la revendication 22, caractérisé en ce que l'extrudeuse pour l'étape de traitement a) comporte au moins un dispositif de dosage séparé pour les matières solides, pour l'étape de traitement b), un dispositif de dosage du liquide, pour l'étape de traitement d), une tubulure de dégazage, et pour l'étape de traitement e), une filière.

24. Appareil selon les revendications 22 et 23, caractérisé en ce que l'extrudeuse est une extrudeuse à double vis.

25. Appareil selon les revendications 22 à 24, caractérisé en ce que les éléments de retenue forment une chambre de pétrissage, de préférence en deux étages, fermée.

26. Appareil selon les revendications 22 à 25, caractérisé en ce que la chambre de pétrissage fermée comporte des éléments de pétrissage en version droite et/ou gauche.

27. Appareil selon les revendications 22 à 26, caractérisé en ce que la vis sans fin, avant l'étape de traitement d), comporte d'autres éléments de pétrissage pour l'intégration d'autres adjuvants.

28. Fonte d'amidon transformable de façon thermoplastique, homogène, pouvant être préparée par le procédé selon les revendications 1 à 21, caractérisée en ce qu'elle est constituée de 95 à 53,2 parties en poids au moins d'un amidon chimiquement modifié, de 4,8 à 39,8 parties en poids au moins d'un plastifiant, de 0,1 à 2 parties en poids au moins d'un émulsifiant et de 0,1 à 5 parties en poids d'urée et/ou de dérivés de l'urée ou de mélanges de ces dérivés, par rapport au mélange total.

29. Fonte d'amidon thermoplastiquement transformable, selon la revendication 28, caractérisée en ce qu'elle est constituée de 70 parties en poids au moins d'un amidon hydroxyalkylé, de 27,8 parties en poids au moins d'un plastifiant, de 0,2 partie en poids au moins d'un émulsifiant et de 2,0 parties en poids d'urée et/ou de dérivés de l'urée ou de mélanges de ces dérivés, par rapport au mélange total.

30. Fonte d'amidon selon la revendication 28, caractérisée en ce qu'elle est constituée de 80 parties en poids au moins d'un amidon hydroxyalkylé, de 18,8 parties en poids au moins d'un plastifiant, de 0,2 partie en poids au moins d'un émulsifiant et de 1 partie en poids d'urée et/ou de dérivés de l'urée ou de mélanges de ces dérivés, par rapport au mélange total.

31. Fonte d'amidon thermoplastiquement transformable, faiblement visqueuse, homogène, selon la revendication 28, caractérisée en ce qu'elle présente une stabilité à l'état fondu élevée et une viscosité fondue comprise entre 500 et 30 000 Pa.s, mesurée à 160°C et 236,4 N dans un viscosimètre de fusion de Göttfert.

Fig. 1

Fig. 2

EP 0 516 030 B1